# FASCICULE DE BREVET EUROPEEN

(11) **EP 0 404 678 B1**
(45) Date de publication et mention de la délivrance du brevet: **25.08.1993**
(21) Numéro de dépôt: 90401752.2
(22) Date de dépôt: 21.06.1990
(51) Int. Cl.: C03B 25/08

(54) **Enceinte de conditionnement thermique**
Thermischer Konditionierungsofen
Thermal conditioning furnace

(30) Priorité: 23.06.1989 DE 3920573
(43) Date de publication de la demande: 27.12.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Vanaschen, Luc, B-4700 Eupen (BE); Kuster, Hans-Werner, D-5100 Aachen (DE); D'Iribarne, Benoit, Laidon Pasildon Essex SS 15 6EE (GB); Thau, Achim, D-5000 Köln 91 (DE)
(74) Mandataire: Menes, Catherine

(56) Documents cités:
- FR-A- 1 527 937
- FR-A- 2 145 952
- FR-A- 2 275 412
- GB-A- 1 027 302
- US-A- 1 698 479

## Description

L'invention concerne une enceinte de conditionnement thermique destinée plus particulièrement au refroidissement contrôlé -à la suite d'un traîtement à température élevée- de feuilles de verre minces, planes, transportées en position horizontale par un convoyeur à rouleaux entraîné en continu. L'invention concerne plus précisément celles de ces enceintes qui comportent au moins deux zones séparées de refroidissement, réglables indépendamment.

Lorsque des déformations et/ou des tensions dans des feuilles de verre ne doivent pas se produire à la suite d'un traîtement à température élevée, il est nécessaire de procéder à un refroidissement contrôlé, lent et régulier. Ce refroidissement ou recuit s'opère par convection dans une enceinte de conditionnement thermique du type four traversant ou non, dans laquelle est soufflé et brassé un courant d'air, l'air étant soufflé par des buses transversales et aspiré à l'entrée de l'enceinte dans laquelle il circule en sens opposé au sens de transport des feuilles de verre. (DE-A-1 049 549 et DE-A-1 960 367).

D'autre part, il est connu du document FR-A-2 145 952 une enceinte de conditionnement thermique notamment en vue du recuit de feuilles de verre dans laquelle le refroidissement est opéré à l'aide d'éléments absorbeurs du rayonnement thermique émis par le verre, ces éléments absorbeurs étant refroidis, un courant d'air chaud étant établi en sens inverse du sens de défilement du verre chaud afin de contrôler le gradient thermique établi dans l'épaisseur du verre pendant son recuit.

Il s'est avéré que les enceintes connues de l'art ne donnent pas des résultats satisfaisants dans le cas des feuilles de verre très minces, de moins de 3 mm d'épaisseur par exemple, du moins si on se réfère aux exigences les plus grandes en ce qui concerne la planéité et l'absence de contraintes. De telles exigences sont par exemple requises pour des feuilles de verre destinées à être associées par feuilletage et subissant avant leur formage un traîtement à température élevée. Un tel traîtement est par exemple nécessaire pour appliquer des électrodes d'alimentation en courant et/ou procéder à la cuisson d'un encadrement émaillé. Des feuilles de verre ainsi préparées entrent notamment dans la réalisation de pare-brise chauffants.

Les procédés usuels ne conduisent pas - sauf à procéder de manière exceptionnelle - à une qualité optique semblable à la qualité optique couramment obtenue pour des pare-brise traditionnels non chauffants, ceci principalement en raison de l'état des feuilles de verre avant leur formage. En effet, pour ne pas exercer une influence négative sur la qualité du vitrage feuilleté, chaque feuille de verre doit être, non seulement rigoureusement plane et sans déformations, mais aussi parfaitement exempte de contraintes internes susceptibles de générer des déformations gênantes lors du formage.

La présente invention a pour but une enceinte de conditionnement thermique plus spécialement adaptée au refroidissement des feuilles de verre minces après un traîtement à température élevée, les feuilles de verre refroidies devant satisfaire les exigences extrêmes imposées en matière de planéité et d'absences de contraintes à des feuilles de verre destinées à être assemblées par feuilletage.

L'enceinte de conditionnement thermique selon l'invention comporte une première zone de refroidissement limitée longitudinalement par des cloisons ne laissant que des fentes étroites d'entrée/sortie des feuilles de verre ayant de chaque côté du convoyeur un absorbeur de rayonnement s'étendant sur toute la largeur de l'enceinte, la température de ces absorbeurs et le débit d'air de refroidissement qui les traversent étant réglables et une seconde zone de refroidissement comportant, d'une part des buses à fente placées de chaque côté du convoyeur, disposées perpendiculairement au sens de transport et soufflant de l'air de refroidissement régulé en température et, d'autre part des ouvertures donnant à l'air de refroidissement une composante de vitesse axiale, opposée à la direction de transport.

Une enceinte de conditionnement thermique répondant aux caractéristiques de l'invention permet de satisfaire les exigences les plus grandes dans le cas du refroidissement de feuilles de verre minces et, ceci même si la vitesse de transport des feuilles de verre est relativement élevée.

Dans une enceinte selon l'invention, dans la phase la plus critique du refroidissement, qui correspond aux températures de vitrages les plus élevées, le refroidissement s'opère uniquement par absorption du rayonnement au moyen de tubes ou caissons d'absorption de grande surface ayant une température en surface réglée de façon optimale.

Pour éviter toute convection qui entraînerait une perturbation du refroidissement, la première zone de refroidissement est conçue comme une chambre fermée et ne comporte que deux ouvertures en forme de fentes pour l'entrée et la sortie des feuilles, ces fentes étant aussi étroites que le permet l'épaisseur des feuilles de verre. Dans cette première zone de refroidissement, la feuille de verre se refroidit de manière lente et régulière et sa température est abaissée d'environ 50° C, ce qui suffit à l'écarter de la gamme des températures critiques. Pour ce faire, la température en surface des absorbeurs de rayonnement est typiquement régulée à une température d'environ 400° C en utilisant, le cas échéant et notamment lors de la phase de démarrage du four des corps de chauffe électriques.

Après cette première phase de refroidissement, les feuilles de verre pénétrent dans la seconde zone de refroidissement, dans laquelle s'opère un refroidissement toujours régulier mais plus intensif, essentiellement par convection d'air de refroidissement soufflé par des buses à fente et circulant dans le sens opposé au sens de transport des feuilles de verre.

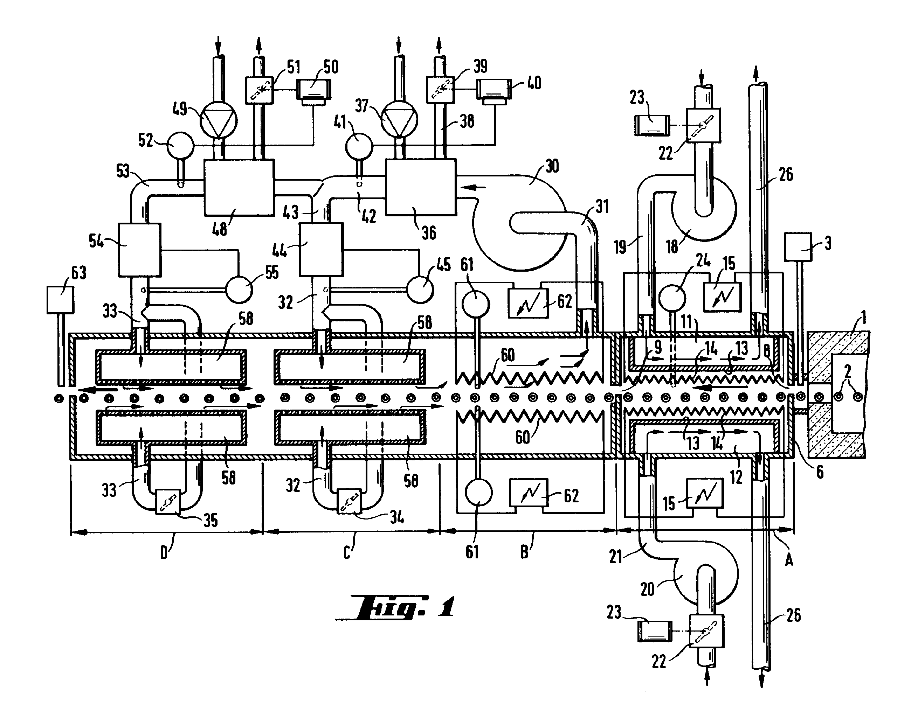

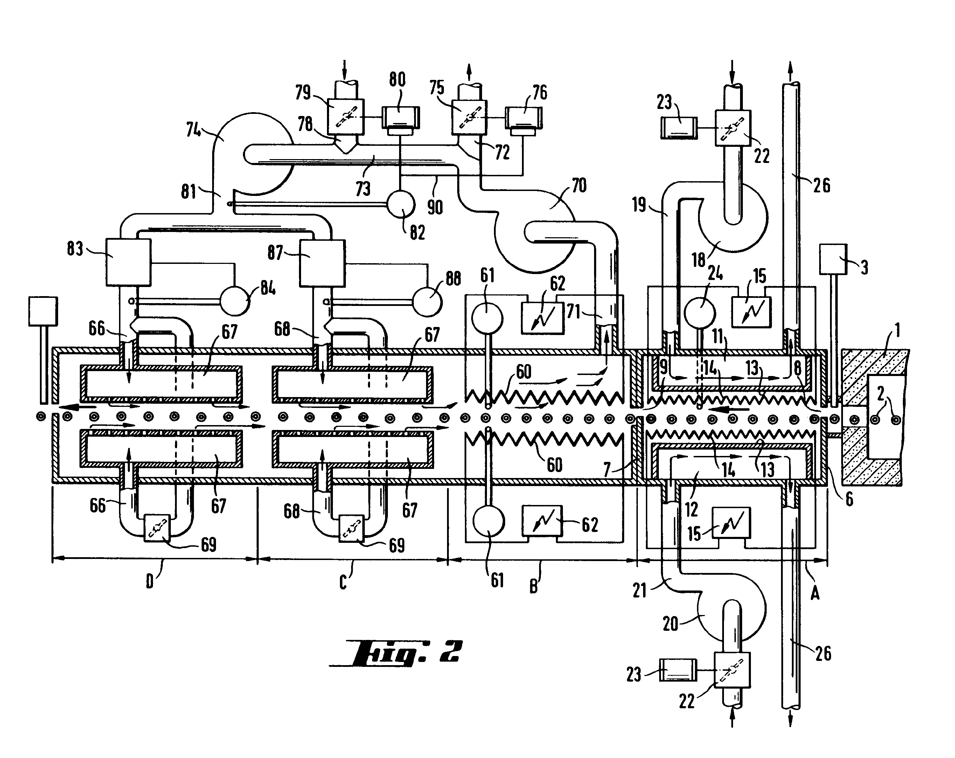

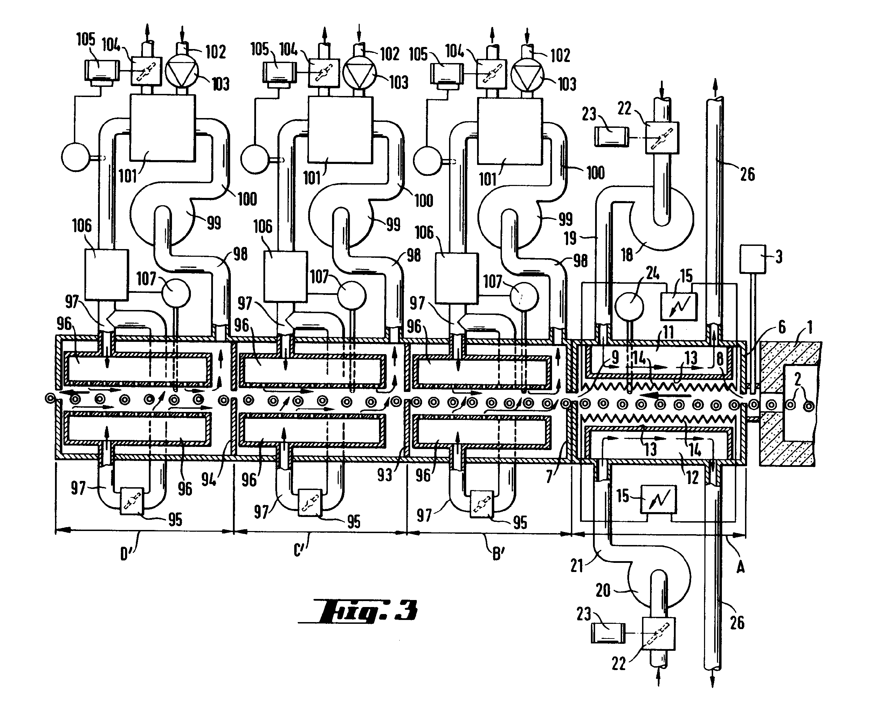

D'autres détails et caractéristiques avantageuses de l'invention sont décrits ci-après en référence aux dessins annexés qui représentent :
. **figure 1** : un premier mode de réalisation d'une enceinte de conditionnement thermique conforme à l'invention,
. **figure 2** : un deuxième mode de réalisation d'une enceinte de conditionnement thermique conforme à l'invention,
. **figure 3** : un troisième mode de réalisation d'une enceinte de conditionnement thermique conforme à l'invention.

L'enceinte de conditionnement thermique est disposée à la suite d'un four 1 où s'effectue par exemple la cuisson des émaux déposés par sérigraphie sur une plaque de verre mince, typiquement de 1,5 mm à 2,5 mm d'épaisseur s'agissant de plaques destinées à un assemblage par feuilletage pour un pare-brise. Au sortir de ce four, la température des plaques de verre est de l'ordre de 500-600°C. Les plaques de verre sont transportées dans l'enceinte de conditionnement thermique par le convoyeur 2 synchronisé avec la vitesse du four 1. Un pyromètre à rayonnement 3 mesure la température réelle des plaques de verre lors de leur entrée, cette température servant de référence aux différents dispositifs décrits ci-après.

L'enceinte de conditionnement thermique comprend deux zones de refroidissement, à savoir une première zone de refroidissement A et une seconde zone de refroidissement comportant trois sections B, C et D.

La zone de refroidissement A est fermée côté four 1 par une cloison 6 et vis-à-vis de la section B par une cloison 7. Ces cloisons 6 et 7 comportent des ouvertures étroites du type fente autorisant l'entrée (fente 8) et la sortie (fente 9) des plaques, les dimensions et la configuration des fentes étant choisies de manière à limiter autant que possible les échanges avec l'air extérieur. Les autres faces de l'enceinte sont fermées de manière aussi étanche que possible.

Le refroidissement des plaques de verre s'effectue à l'intérieur de la zone de refroidissement A uniquement par absorption de la chaleur au moyen d'absorbeurs de rayonnement 11 et 12 disposés respectivement au-dessus et au-dessous du convoyeur 2. Les absorbeurs de rayonnement 11 et 12 sont constitués de boîtiers métalliques de grande surface alimentés intérieurement par de l'air à température régulée, de sorte que les faces planes de refroidissement 13 situées en regard des plaques de verre soient régulées à une température voulue. Lors de la phase de démarrage du four pendant laquelle les rouleaux du convoyeur 2 sont encore relativement froids, la zone de refroidissement A est réchauffée par des corps de chauffe 14 placés entre le convoyeur 2 et les plaques de refroidissement 13 alimentée en courant électrique par un régulateur de tension 15 piloté par la commande du procédé.

L'absorbeur de rayonnement supérieur 11 est alimenté par le ventilateur 18 via la conduite 19 et, l'absorbeur de rayonnement inférieur 12 par la ventilateur 20 via la conduite 21. Le débit de l'air de refroidissement est réglé à la valeur nécessaire par un volet régulateur 22 déplacé par un moteur électrique 23 piloté par le dispositif de commande du procédé. La grandeur de régulation est la température intérieure de la chambre, mesurée entre la surface du verre et la face de refroidissement 13, au moyen d'une sonde de température 24 protégée contre le rayonnement direct.

Pour plus de clarté, les circuits de transmission des signaux et les circuits de commande ne sont pas représentés. L'air de refroidissement est évacué à l'air libre par la conduite 26. Dans la zone de refroidissement A, le refroidissement des plaques de verre est généralement inférieur à 50° C, ce qui est toutefois suffisant pour s'éloigner des températures critiques susceptibles de générer ultérieurement des défauts.

Dans le mode de réalisation représenté figure 1, les sections B, C et D de la seconde zone de refroidissement ne sont pas séparées l'une de l'autre, mais constituent un canal continu traversé par l'air de refroidissement en sens inverse du sens de transport des plaques de verre. L'air de refroidissement circule en circuit fermé ; l'air extrait de la section B par le ventilateur 30 monté sur la conduite 31 est transmis aux sections C et D par les conduites 32 et 33 après un éventuel équilibrage de sa température.

La température de l'air de refroidissement introduit dans la section C est régulée par un échangeur thermique 36 qui le refroidit par de l'air extérieur aspiré au moyen d'une pompe 37 dont le débit est régulé au moyen d'un volet régulateur 39 agencé dans la conduite 38. Le volet régulateur 39 est commandé par un moteur électrique 40 dont la vitesse est modifiée en fonction de la température par un thermocouple 41 placé dans la conduite 42.

De la conduite 42 part la conduite 43 par laquelle l'air de refroidissement destiné à la section C est envoyé tout d'abord dans un réchauffeur en continu 44 comportant des résistances électriques chauffantes mises uniquement en action si l'air présente une température trop faible dans la conduite 32, ce qui peut se produire notamment lors d'une phase de démarrage du four. L'association de ce chauffage et de l'échangeur thermique permet un réglage fin de la température de l'air de refroidissement. L'air de refroidissement introduit dans la section C doit présenter typiquement une température d'environ 300° contrôlée par un thermocouple 45.

L'air de refroidissement transmis à la section D par les conduites 33 doit présenter une température d'environ 200°. Pour cela, il est refroidi par un autre échangeur thermique 48 alimenté en air frais par la pompe 49. Le débit est réglé par le volet régulateur 51 commandé par le moteur électrique 50, et ceci en fonction de la température constatée dans la conduite 53 au moyen du thermocouple 52. Entre la conduite 53 et les conduites 33 est prévu à nouveau un réchauffeur en continu électrique 54 au moyen duquel l'air de refroidissement est éventuellement porté à une température plus élevée, la mise en marche du réchaufeur 54 étant contrôlée par la mesure par le thermocouple 55 de la température de l'air dans la conduite 33.

Les sections C et D comportent de chaque côté du convoyeur 2 des caissons de soufflage 58 dans lesquels débouchent les conduites 32 et 33 et qui sont munis, sur leurs faces situées en regard des plaques de verre, de buses à fente disposées en travers, sur toute la largeur des caissons de soufflage. Des volets régulateurs 34 et 35 permettent éventuellement de régler le débit d'air alimentant chaque caisson 58.

La section B dans laquelle l'air de refroidissement est aspiré est également équipée de dispositifs de chauffe électriques 60 qui permettent en cas de besoin d'élever la température des rouleaux du convoyeur et de l'ensemble de la zone. La température est mesurée par des thermocouples 61 protégés contre le rayonnement direct, le signal correspondant servant de grandeur réglée pour le régulateur de tension 62.

A la sortie de l'enceinte, la température des plaques de verre est contrôlée par un pyromètre 63, la température des glaces doit être d'environ 200° C.

Avec un air de refroidissement circulant en circuit fermé, la quantité d'air introduite dans l'enceinte correspond par définition à la quantité d'air aspirée. Mais il peut être utile de modifier légèrement le rapport entre l'air soufflé et l'air aspiré, afin de produire une légère surpression ou au contraire une légère dépression dans l'enceinte même.

Dans le mode de réalisation représenté figure 2, l'enceinte comprend également deux zones de refroidissement, une première zone de refroidissement A et une seconde zone de refroidissement de trois sections B, C et D. Comme précédemment la zone de refroidissement A est isolée par la cloison 6 munie d'une fente d'entrée 8, la cloison 7 dans laquelle est ménagée une fente de sortie 9. La zone de refroidissement A de la figure 2 est identique à celle représentée à la figure 1.

L'air refroidissant la section D est soufflé par les caissons de soufflage 67 alimentés par les conduites 66 et disposées de chaque côté du convoyeur 2. Les caissons de soufflage 67 sont munis de fentes de soufflage disposées transversalement et s'étendant sur toute la largeur des caissons. Des caissons de soufflage 67 de même type sont disposés dans la section C où ils sont alimentés par les conduites 68. Les volets régulateurs 69 insérés dans les conduites 66 et 68 permettent le réglage des débits d'air de refroidissement. L'air soufflé par les caissons de soufflage 67 circule dans l'enceinte en sens inverse du sens de transport des plaques de verre comme l'indiquent les flèches et est aspiré au moyen du ventilateur 70 monté sur la conduite 71 débouchant dans la section B.

A partir du ventilateur 70, une partie de l'air de refroidissement aspiré est renvoyée dans l'atmosphère par la conduite 72, l'autre partie repart dans le circuit par la conduite 73 et arrive tout d'abord dans le ventilateur 74. Un volet régulateur 75 actionné par un moteur 76 est utilisé pour modifier les rapports des débits dans les conduites 72 et 73.

Avant d'être aspiré par un ventilateur 74, l'air chaud arrivant par la conduite 73 est mélangé à de l'air froid arrivant par une conduite 78, la proportion d'air froid étant réglée par le volet régulateur 79 actionné par le moteur 80. La proportion d'air froid détermine la température de l'air dans la conduite 81, le volet régulateur d'air froid 79 étant plus ou moins ouvert en fonction de la température mesurée dans la conduite 81 au moyen du thermocouple 82. Un réglage fin de la température de l'air froid pénétrant dans les sections C et D est obtenu par des corps de chauffe 83 et 87 pilotés en fonction des températures mesurées dans les conduites 66 et 68 par les thermocouples 84 et 88.

Les volets régulateurs 79 et 75 sont couplés par le circuit de commande 90, le débit d'air froid aspiré correspondant soit au débit de l'air chaud transmis dans l'atmosphère soit si besoin étant légèrement différent de façon à créer une légère surpression ou dépression dans l'enceinte par élévation ou abaissement de la quantité d'air froid aspirée par rapport à la quantité d'air chaud renvoyée à l'atmosphère.

La section B est équipée de moyens de régulation de la température tels que des dispositifs de chauffe électriques 60 placés au-dessus et en-dessous du convoyeur 2. La température est contrôlée par le thermocouple 61 placé entre le convoyeur 2 et les dispositifs de chauffe 60.

Dans le troisième mode de réalisation représenté figure 3, l'enceinte comporte une première zone de refroidissement A et une seconde zone de refroidissement comprenant les trois sections B', C' et D'. La zone de refroidissement A est identique à la zone de refroidissement A décrite à l'aide de la figure 1.

Les sections B', C' et D' sont isolées l'une de l'autre par des cloisons et, chaque section possède son propre circuit fermé d'air de refroidissement. Une cloison 93 entre les sections B' et C' empêche le passage de l'air de la section C' à la section B' et la cloison 94 protège la section D' de la section C'.

Dans chacune des trois sections B', C' et D' on maintient un courant d'air de refroidissement circulant en substance dans le sens longitudinal, en sens inverse du sens de transport des plaques de verre, un ventilateur et un système de régulation du débit et de la température de l'air de refroidissement étant attribués à chacune des trois sections. Les dispositifs de production et de régulation du courant d'air de refroidissement sont identiques pour les trois sections et seront décrits simplement pour la section B'.

Au-dessus et en-dessous du convoyeur sont disposés des caissons de soufflage 96 munis de fentes de soufflage agencées perpendiculairement à la direction de transport des plaques de verre.

Les caissons de soufflage 96 sont alimentés par les conduites 97 dont le débit est réglé le cas échéant par les volets régulateurs 95, tandis que l'air de refroidissement réchauffé est aspiré par la conduite 98. Le ventilateur 99 envoie par une conduite 100 l'air de refroidissement réchauffé vers l'échangeur thermique 101. Dans cet échangeur thermique 101, l'air est refroidi à la température voulue par de l'air froid aspiré de l'extérieur par la conduite 102 au moyen de le pompe 103, le débit de l'air froid étant commandé par le volet régulateur 104 au moyen du moteur électrique 105. Le réglage de précision de la température de l'air de refroidissement amené dans les caissons de soufflage 96 est effectué par le réchauffeur en continu électrique 106 piloté en fonction de la température mesurée au moyen du thermocouple 107 protégé contre le rayonnement direct.

Les trois sections B', C' et D' de la seconde zone de refroidissement étant réglables séparément, la température à l'intérieur de chaque section peut être réglée de manière optimale à la valeur la plus favorable, indépendamment de la température régnant dans les sections voisines.

## Revendications

1. Enceinte de conditionnement thermique pour le refroidissement contrôlé à la suite d'un traîtement à température élevée de feuilles de verre minces, planes transportées en position horizontales par un convoyeur à rouleaux (2) entraîné en continu, constituée par au moins deux zones de refroidissement indépendantes, **caractérisée en ce que** la première zone de refroidissement (A) est limitée longitudinalement par des cloisons (6, 7) ne laissant que des fentes étroites (8, 9) d'entrée/sortie des feuilles de verre et comporte de chaque côté du convoyeur (2) un absorbeur de rayonnement (11, 12) s'étendant sur toute la largeur de l'enceinte, la température de ces absorbeurs et le débit d'air de refroidissement qui les traversent étant réglables **et en ce que** la seconde zone de refroidissement (B, C, D) comporte d'une part des buses à fente placées de chaque côté du convoyeur (2), disposées perpendiculairement au sens de transport et soufflant de l'air de refroidissement régulé en température et d'autre part des ouvertures donnant à l'air de refroidissement une composante de vitesse axiale dans une direction opposée à la direction de transport.

2. Enceinte de conditionnement thermique selon la revendication 1, **caractérisée en ce que** chaque absorbeur de rayonnement (11, 12) comporte une plaque d'absorption métallique plane (13).

3. Enceinte de conditionnement thermique selon la revendication 2, **caractérisée en ce que** des corps de chauffe électriques (14) sont prévus dans la zone de refroidissement (A) entre le convoyeur (2) et les plaques d'absorption (13).

4. Enceinte de conditionnement thermique selon l'une des revendications 2 ou 3, **caractérisée** par un circuit de régulation de la température de la zone de refroidissement opérant en fonction de la température mesurée par une sonde (24) disposée entre le convoyeur (2) et la plaque d'absorption (13) et protégée du rayonnement direct.

5. Enceinte de conditionnement thermique selon l'une des revendications 2 à 4, **caractérisée par** des ventilateurs (18, 20) associés à chacun des absorbeurs de rayonnement (11, 12).

6. Enceinte de conditionnement thermique selon l'une des revendications précédentes, **caractérisée en ce que** la seconde zone de refroidissement comprend trois sections (B, C, D) dans lesquelles la température et/ou les conditions de circulation de l'air de refroidissement sont réglables séparément.

7. Enceinte de conditionnement thermique selon la revendication 6, **caractérisée en** ce que les trois sections (B, C, D) de la seconde zone de refroidissement forment un canal continu traversé de part en part, longitudinalement par l'air de refroidissement aspiré par une conduite placée dans l'extrémité chaude (section B).

8. Enceinte de conditionnement thermique selon la revendication 6 ou 7, **caractérisée** en ce **que** l'air de refroidissement circule en circuit fermé et est refroidi à la température voulue par des échangeurs thermiques (36, 48).

9. Enceinte de conditionnement thermique selon la revendication 6 ou 7, **caractérisée** en ce **que** l'air de refroidissement circule partiellement en circuit fermé et est refroidi par admission d'air froid mélangé à l'air chaud associé.

10. Enceinte de conditionnement thermique selon la revendication 8 ou 9, **caractérisée par** des moyens de chauffage (44, 54) prévus pour une régulation fine de la température de l'air de refroidissement.

11. Enceinte de conditionnement thermique selon la revendication 8, 9 ou 10, **caractérisée en ce que** la température de l'air avant l'entrée dans les caissons de soufflage (58) des buses à fente sert de grandeur de régulation de la température de l'air de refroidissement.

12. Enceinte de conditionnement thermique selon l'une quelconque des revendications 6 à 11, **caractérisée en** ce **que** les deux dernières sections (C, D) de la seconde zone de refroidissement sont équipées chacune de caissons de soufflage (58, 67) recevant de l'air de refroidissement dont la température est réglable séparément.

13. Enceinte de conditionnement thermique selon l'une quelconque des revendications 6 à 12, **caractérisée** par des dispositifs de chauffage électriques (60) dans la section (B) adjacente à la zone de refroidissement (A).

14. Enceinte de conditionnement thermique selon l'une quelconque des revendications 6 à 13, **caractérisée** par des cloisons (93, 94) séparant les sections (B', C', D') de la seconde de refroidissement.

15. Enceinte de conditionnement thermique selon la revendication 14, **caractérisée en ce que** dans chaque section (B', C', D') de la seconde zone de refroidissement sont agencés des caissons de soufflage (96) munis de fentes de soufflage alimentés chacun par leur propre ventilateur (99).

16. Enceinte de conditionnement thermique selon la revendication 15, **caractérisée en ce que** dans chaque section (B', C', D') une circulation en circuits fermés munis d'échangeurs thermiques (101) et de moyens de chauffage (106) assure un réglage fin de la température de l'air de refroidissement.

## Patentansprüche

1. Thermischer Konditionierungskanal zum gesteuerten Abkühlen von dünnen, in horizontaler Lage auf einem kontinuierlich angetriebenen Rollenförderer (2) transportierten ebenen Glasscheiben in Anschluß an eine Behandlung bei erhöhter Temperatur, mit wenigstens zwei unabhängigen Kühlzonen,
**dadurch gekennzeichnet,** daß die erste Kühlzone (A) in Längsrichtung durch Trennwände (6,7) begrenzt ist, die nur schmale Einlauf- und Auslaufschlitze (8,9) für die Glasscheiben aufweisen, und auf jeder Seite des Rollenförderers (2) jeweils einen sich über die gesamte Breite des Kanals erstreckenden Strahlungsabsorber (11,12) umfaßt, wobei die Temperatur der Strahlungsabsorber und der Volumenstrom der die Strahlungsabsorber (11,12) durchströmenden Kühlluft regelbar sind, und daß die zweite Kühlzone (B, C, D) einerseits auf beiden Seiten des Rollenförderers (2) sich quer zur Transportrichtung erstreckende, mit temperaturgeregelter Kühlluft beaufschlagbare Schlitzdüsen umfaßt, und andererseits Abzugsöffnungen vorgesehen sind, durch die der Kühlluft eine axiale Strömungsrichtung entgegen der Förderrichtung der Glasscheiben erteilt wird.

2. Konditionierungskanal nach Anspruch 1, dadurch gekennzeichnet, daß jeder Strahlungsabsorber (11,12) eine ebene metallische Absorberplatte (13) aufweist.

3. Konditionierungskanal nach Anspruch 2, dadurch gekennzeichnet, daß in der Kühlzone (A) zwischen dem Förderer (2) und den Absorberplatten (13) elektrische Heizelemente (14) vorgesehen sind.

4. Konditionierungskanal nach Anspruch 2 oder 3, gekennzeichnet durch einen Regelkreis zur Regelung der Temperatur der Kühlzone in Abhängigkeit von der durch einen zwischen dem Förderer (2) und der Absorberplatte (13) angeordneten, gegen direkte Strahlungsbeaufschlagung geschützten Temperaturfühler (24).

5. Konditionierungskanal nach einem er Ansprüche 2 bis 4, gekennzeichnet durch Ventilatoren (18,20), die jeweils mit den Strahlungsabsorbern (11,12) verbunden sind.

6. Konditionierungskanal nach einem der voraufgehenden Ansprüche, dadurch gekennzeichnet, daß die zweite Kühlzone drei Abschnitte (B,C,D) umfaßt, in denen die Temperatur und/oder die Strömungsbedingungen der Kühlluft getrennt regelbar sind.

7. Konditionierungskanal nach Anspruch 6, dadurch gekennzeichnet, daß die drei Abschnitte (B,C,D) der zweiten Kühlzone einen durchgehenden Kanal bilden, der insgesamt in Längsrichtung von der Kühlluft durchströmt wird, die durch eine am heißen Ende (Abschnitt B) angeordnete Leitung abgesaugt wird.

8. Konditionierungskanal nach Anspruch 6 oder 7, dadurch gekennzeichnet, daß die Kühlluft in einem geschlossenen Kreislauf geführt und durch Wärmetauscher (36,48) auf die gewünschte Temperatur heruntergekühlt wird.

9. Konditionierungskanal nach Anspruch 6 oder 7, dadurch gekennzeichnet, daß die Kühlluft teilweise in einem geschlossenen Kreislauf geführt und durch Beimischung von Kaltluft zu der erwärmten Luft gekühlt wird.

10. Konditionierungskanal nach Anspruch 8 oder 9, gekennzeichnet durch Erwärmungsmittel (44,54) zur Feinregelung der Temperatur der Kühlluft.

11. Konditionierungskanal nach Anspruch 8, 9 oder 10, dadurch gekennzeichnet, daß die Lufttemperaut vor dem Eintritt in die Schlitzdüsen aufweisenden Blaskästen (58) als Regelgröße für die Temperaturregelung der Kühlluft dient.

12. Konditionierungskanal nach einem der Ansprüche 6 bis 11, dadurch geknnzeichnet, daß die beiden letzten Abschnitte (C,D) der zweiten Kühlzone jeweils mit Blaskästen (58,67) ausgestattet sind, die mit Kühlluft beaufschlagbar sind, deren Temperatur getrennt regelbar ist.

13. Konditionierungskanal nach einem der Ansprüche 6 bis 12, gekennzeichnet durch elektrische Heizvorrichtungen (60) in dem der Kühlzone (A) benachbarten Abschnitt (B).

14. Konditionierungskanal nach einem der Ansprüche 6 bis 13, gekennzeichnet durch Trennwände (93,94), die die Abschnitte (B',C',D') der zweiten Kühlzone voneinander trennen.

15. Konditionierungskanal nach Anspruch 14, dadurch gekennzeichnet, daß in jedem Abschnitt (B',C',D') der zweiten Kühlzone mit Blasschlitzen versehene Blaskästen (96) angeordnet sind, die jeweils von einem eigenen Ventilator (99) mit Kühlluft beaufschlagt werden.

16. Konditionierungskanal nach Anspruch 15, dadurch gekennzeichnet, daß in jedem Abschnitt (B',C',D') eine in geschlossenen, mit Wärmetauschern (101) und Erwärmungsmitteln (106) versehenen Kreisläufen geführte Strömung eine Feinregelung der Temperatur der Kühlluft sicherstellt.

## Claims

1. Thermal conditioning enclosure for the controlled cooling pursuant to the high temperature treatment of plane, thin glass sheets, transported in a horizontal position by a continuously driven roller conveyor (2), the enclosure being constituted of at least two independent cooling zones, characterized in that the first cooling zone (A) is limited longitudinally by partitions (6, 7) leaving only narrow inlet/outlet slits (8, 9) for the glass sheets and comprises, on each side of the conveyor (2), a radiation absorber (11, 12) extending across the entire width of the enclosure, the temperature of these absorbers and the flow rate of cooling air which passes through them being controllable, and in that the second cooling zone (B, C, D) comprises, on the one hand, slit-shaped nozzles situated on either side of the conveyor (2) and disposed perpendicularly to the direction of conveying and blowing cooling air regulated in temperature and, on the other hand, openings giving to the cooling air an axial velocity component in a direction opposite to the direction of conveying.

2. Thermal conditioning enclosure according to Claim 1, characterized in that each radiation absorber (11, 12) comprises a plane metal absorption plate (13).

3. Thermal conditioning enclosure according to Claim 2, characterized in that electrical heating bodies (14) are provided in the cooling zone (A) between the conveyor (2) and the absorption plates (13).

4. Thermal conditioning enclosure according to one of Claims 2 or 3, characterized by a circuit for regulating the temperature of the cooling zone, operating as a function of the temperature measured by a probe (24) disposed between the conveyor (2) and the absorption plate (13) and protected from direct radiation.

5. Thermal conditioning enclosure according to one of Claims 2 to 4, characterized by blowers (18, 20) associated with each of the radiation absorbers (11, 12).

6. Thermal conditioning enclosure according to one of the preceding Claims, characterized in that the second cooling zone comprises three sections (B, C, D), in which the temperature and/ or the circulation conditions of the cooling air are separately controllable.

7. Thermal conditioning enclosure according to Claim 6, characterized in that the three sections (B, C, D) of the second cooling zone form a continuous duct traversed from end to end, longitudinally, by the cooling air sucked out through a pipe situated in the hot end (section B).

8. Thermal conditioning enclosure according to Claim 6 or 7, characterized in that the cooling air flows in closed circuit and is cooled to the desired temperature by heat exchangers (36, 48).

9. Thermal conditioning enclosure according to Claim 6 or 7, characterized in that the cooling air flows partly in closed circuit and is cooled by an intake of cold air mixed with the associated hot air.

10. Thermal conditioning enclosure according to Claim 8 or 9, characterized by heating means (44, 54) provided for a fine control of the temperature of the cooling air.

11. Thermal conditioning enclosure according to Claims 8, 9 or 10, characterized in that the temperature of the air before entry into the blowing boxes (58) of the slit-shaped nozzles serves as a regulation value for the temperature of the cooling air.

12. Thermal conditioning enclosure according to any one of Claims 6 to 11, characterized in that the last two sections (C, D) of the second cooling zone are each equipped with blowing boxes (58, 67) receiving cooling air, the temperature of which is separately controllable.

13. Thermal conditioning enclosure according to any one of Claims 6 to 12, characterized by electrical heating devices (60) in the section (B) adjacent to the cooling zone (A).

14. Thermal conditioning enclosure according to any one of Claims 6 to 13, characterized by partitions (93, 94) separating the sections (B', C', D') of the second cooling zone.

15. Thermal conditioning enclosure according to Claim 14, characterized in that, in each section (B', C', D') of the second cooling zone, blowing boxes (96) are formed, equipped with blowing slits and each supplied by its own blower (99).

16. Thermal conditioning enclosure according to Claim 15, characterized in that, in each section (B', C', D'), a circulation in closed circuits provided with heat exchangers (101) and with heating means (106) assures a fine control of the temperature of the cooling air.
